# EUROPÄISCHE PATENTANMELDUNG

(11) **EP 1 255 093 A2**
(43) Veröffentlichungstag der Anmeldung: **06.11.2002**
(21) Anmeldenummer: 02008532.0
(22) Anmeldetag: 16.04.2002
(51) Int. Cl.: G01F 1/075

(54) **Flüssigkeitszähler**

(30) Priorität: 30.04.2001 DE 10121274
(71) Anmelder: Invensys Metering Systems GmbH Ludwigshafen, 67063 Ludwigshafen (DE)
(72) Erfinder: Lang, Gerhard, 67134 Birkenheide (DE)
(74) Vertreter: Patentanwälte Möll und Bitterich

(57) **Zusammenfassung**

Zwischen Flügelrad (20) und Magnetkupplung (30) eines Trockenläufer-Wasserzählers ist eine zur Rotationsachse des Flügelrades (20) konzentrische Kupplung (24, 34) angeordnet. Diese entkoppelt das Flügelrad (20) in axialer Richtung von der Magnetkupplung (30) und verleiht dem Flügelrad (20) in Umfangsrichtung einen auf weniger als 360° begrenzten Freiheitsgrad gegenüber der Magnetkupplung (30).

## Beschreibung

Die Erfindung betrifft Flüssigkeitszähler mit einem Flügelrad gemäß dem Oberbegriff des Anspruchs 1.

Flüssigkeitszähler mit Flügelrad werden seit mindestens hundert Jahren in Millionen Stückzahlen weltweit eingesetzt. Sie umfassen eine druckfestes Gehäuse, darin ein Messwerk, in dem ein Flügelrad rotiert, ein Zählwerk und eine Kupplung, die die Drehbewegung des Flügelrades auf das Untersetzungsgetriebe des Zählwerks überträgt.

Flüssigkeitszähler mit Flügelrad gibt es als Nassläufer, Teiltrockenläufer und Trockenläufer. Die vorliegende Erfindung betrifft Trockenläufer.

Bei einem Trockenläufer sind Messwerk und Zählwerk durch eine druckfeste Platte getrennt. Die Messflüssigkeit kann somit nicht in das Zählwerk eindringen. Zur Übertragung der Drehbewegung des Flügelrades auf das Untersetzungsgetriebe des Zählwerks wird eine Magnetkupplung verwendet. Diese besteht aus einem ersten Permanentmagnet, der an der Flügelradnabe befestigt ist, und einem zweiten Permanentmagnet, der auf der trockenen Seite der druckfesten Platte positioniert ist. Beide Permanentmagnete sind an Magnetträgern befestigt, die mittels Lagerbuchse auf einem Lagerzapfen gelagert sind. Man vergleiche DE-U 298 06 191, US 4 548 084, US 4 489 600 oder DE-C 32 32 649. Letztgenannte Schrift offenbart zusätzlich die Verwendung einer Spiral-Dämpfungsfeder zwischen Magnetträger und Untersetzungsgetriebe, um bei plötzlichen Durchflusssteigerungen ein Abreißen der Magnetkupplungshälften zu vermeiden.

Entsprechend ihrer Messgenauigkeit werden alle Verbrauchszähler in die metrologischen Klassen A, B oder C einklassifiziert. Durch Optimierung der Messkammer, des Flügelrades und der Flüssigkeitsführung durch die Messkammer ist es heute Stand der Technik, Verbrauchszähler zu bauen, die die höchste metrologische Klasse C erfüllen, solange die Flügelradnabe senkrecht steht. Wird ein solcher Flüssigkeitszähler gekippt, so dass die Flügelradnabe z. B. waagerecht liegt, erfüllt ein solcher Flüssigkeitszähler nur noch die metrologische Klasse A.

Da es nicht möglich war, einen Verbrauchszähler herzustellen, der in beliebiger Einbaulage die höchste metrologische Klasse C erfüllt, hat die Industrie Gehäuse mit unterschiedlichsten Rohranschlüssen für jeden denkbaren Anwendungsfall bereitgestellt. Damit war es dem Installateur stets möglich, den Verbrauchszähler mit senkrecht stehender Flügelradnabe einzubauen. Teilweise wurde durch passende Anschlussflansche dafür gesorgt, dass ein Einbau des Verbrauchszählers in einer von der zugelassenen Einbaulage abweichenden Position nicht möglich war.

Ein Grund für die Messungenauigkeiten der Flügelradzähler sind die Reibkräfte und die von ihnen erzeugten Bremsmomente in den Lagern des Flügelrades, des Untersetzungsgetriebes, der Magnetkupplung und des Zählwerks. Die Lagerreibung konnte beispielsweise dadurch reduziert werden, dass die Lagerpfanne kalottenförmig, der Lagerzapfen sehr spitz ausgeführt wurde. Da die Lager jedoch eine vom Eichgesetz vorgeschriebene Mindestlebensdauer haben müssen, ist eine all zu filigrane Ausgestaltung der Lager nicht möglich.

Außerdem wird die Drehbewegung des Flügelrades durch die Reibung der Zahnräder des Untersetzungsgetriebes und des Rollenzählwerks gebremst. Dabei wirkt sich die Haftreibung besonders negativ aus, weil sie das leichte Anlaufen des Flügelrades schon bei geringsten Durchflüssen der Messflüssigkeit verhindert.

Die Reibkräfte und Bremsmomente sind bei einem Trockenläufer erheblich, da die von den Permanentmagneten der Magnetkupplungen erzeugten Kräfte die Reibung in den Lagern erhöhen. Aufgrund von Fertigungs- und Montagetoleranzen kann nicht verhindert werden, dass die Lager der Magnete auf beiden Seiten der druckfesten Platte gegeneinander versetzt sind. Hinzu kommt, dass die Magnetpole der beiden kooperierenden Permanentmagnete selten exakt zentrisch liegen und bezüglich ihrer Rotationsachse symmetrisch ausgebildet sind. Auf diese Weise entstehen zusätzlich radiale Kräfte, die die Lager aus der Rotationsachse ziehen und somit zusätzliche Reibmomente erzeugen. Auch das Flügelrad wird aus seiner optimal zentrischen Position in der Messkammer gezogen, was die Messgenauigkeit weiter verringert.

Derzeit ist ein Trockenläufer handelsüblich, der dank der Verwendung von abstoßend polarisierten Permanentmagneten beim Einbau mit vertikaler Flügelradnabe die metrologische Klasse C erfüllt. Beim Einbau mit waagerechter Flügelradwelle dagegen sinkt die Messgenauigkeit um zwei Stufen auf die metrologische Klasse A. Handelsübliche Trockenläufer mit anziehend polarisierten Permanentmagneten erfüllen in horizontaler Einbaulage bestenfalls die metrologische Klasse B, in vertikaler Einbaulage nur die metrologische Klasse A.

Der vorliegenden Erfindung liegt die Aufgabe zugrunde, ein Konstruktion anzugeben, die die Herstellung von Trockenläufer-Verbrauchszählern ermöglicht, die bei beliebigem Einbau jeweils dieselbe metrologische Klasse erfüllen, vorzugsweise die höchste Klasse C.

Diese Aufgabe wird gelöst durch einen Flüssigkeitszähler mit den Merkmalen des Anspruchs 1.

Dank der erfindungsgemäßen Kupplung ist das Flügelrad zunächst in axialer Richtung weitestgehend von der Magnetkupplung entkoppelt. Der Freiheitsgrad in Umfangsrichtung ist dabei zunächst gerade so groß, dass die Kupplung axial frei beweglich ist. Das Flügelrad kann daher unter der Wirkung der hydrodynamischen Kräfte stets seine optimale axiale Position in der Messkammer einnehmen, sowohl bei kleinen wie bei großen Durchflüssen und unabhängig von Fertigungs- und Montagetoleranzen.

Macht man den Freiheitsgrad in Umfangsrichtung deutlich größer, z. B. zwischen 180° und knapp 360°, so kann das Flügelrad bei beginnender Wasserströmung seine Drehbewegung aufnehmen, ohne durch die Haftreibung der Magnetkupplung und des Untersetzungsgetriebes im Zählwerk gebremst zu werden. Dabei nimmt das Flügelrad Energie auf. Sobald die Kupplung zwischen Flügelrad und Magnetkupplung schließt, wird ein Impuls übertragen, der die Haftreibung schlagartig überwindet. Ein erfindungsgemäß ausgerüsteter Verbrauchszähler läuft daher schon bei sehr kleinen Durchflüssen sicher an.

Gemäß einer Weiterbildung der Erfindung ist das Flügelrad auch in radialer Richtung von der Magnetkupplung entkoppelt. Dadurch hat ein seitlicher Versatz zwischen den Rotationsachsen von Flügelrad und Magnetkupplung keine Rückwirkung auf das Flügelrad. Das Flügelrad kann unter der Wirkung der hydrodynamischen Kräfte stets die optimale Position einnehmen.

Gemäß einer ersten Ausgestaltung der Erfindung ist die Kupplung als Hülsenkupplung ausgebildet. Vorteilhafterweise ist die Kupplung jedoch als Mitnehmerkupplung, z. B. als Klauenkupplung ausgebildet, aus Symmetriegründen vorteilhafterweise mit je zwei Klauen.

Bei der vorliegenden Erfindung wird die in der einschlägigen Fachwelt allgemein bekannte Tatsache ausgenützt, dass die Flügelräder sich mehr oder weniger weit rückwärts drehen, sobald die Flüssigkeitsströmung gestoppt wird. Diese Rückwärtsbewegung sorgt dafür, dass die Kupplungselemente, z. B. die Klauen der Klauenkupplung, vor dem Wiederanlaufen gegenseitig beabstandet sind.

Eine weitere Verbesserung der Messgenauigkeit lässt sich erreichen, wenn der Lagerpunkt zwischen der Spitze des Lagerzapfens und der Lagerpfanne des Flügelrades dicht unterhalb der Kupplung positioniert ist, da dann das Flügelrad unter dem Einfluss der Schwerkraft stabil hängt.

Gemäß einer Ausgestaltung der Erfindung sitzt der dem Flügelrad zugeordnete Permanentmagnet auf einem Magnetträger, der mittels Lagerbuchse und Lagerzapfen gelagert ist, wobei die mit dem Lagerzapfen kooperierende Fläche des Lagersteins eben ausgebildet und der Innendurchmesser der Lagerbuchse angemessen größer ist als der Durchmesser des Lagerzapfens. Damit findet die Lagerspitze stets identische Bedingungen, auch wenn die Permanentmagnete nicht konzentrisch sind und der Magnetträger außermittig rotiert. Die bei kalottenförmigen oder konischen Lagerflächen auftretenden Rückstellkräfte und die entsprechenden Bremsmomente entfallen völlig.

Nachdem aufgrund der erfindungsgemäßen Kupplung das Flügelrad von den hemmenden Kräften des Untersetzungsgetriebes und insbesondere von den hemmenden Kräften der Permanentmagnete weitestgehend befreit ist, kann es in mehrfacher Hinsicht optimiert werden.

Gemäß einer ersten Weiterbildung ist es so ausgewogen, dass die Summe der Auftriebs- und Abtriebskräfte in der Messflüssigkeit gleich Null ist und es in der Messflüssigkeit gewichtslos schwebt. Dadurch reduzieren sich die Reibkräfte und die Lebensdauer der Lager und die Messgenauigkeit erhöhen sich.

Gemäß einer weiteren und bevorzugten Ausgestaltung der Erfindung ist das Flügelrad so ausbalanciert, dass die Zentren der Auftriebskräfte und Abtriebskräfte auf der Rotationsachse des Flügelrades zusammenfallen und alle Kippmomente verschwinden. Dies führt zu einer weiteren Verringerung der Reibkräfte und zu einer Erhöhung der Lebensdauer und der Messgenauigkeit.

Eine letzte Optimierung des Flüssigkeitszählers ergibt sich, wenn die Messkammer mit ihren hydraulischen Einbauten und die sich in der Messkammer befindenden Teile des Flügelrades spiegelsymmetrisch zu einer Mittelebene ausgebildet sind, die parallel zu Boden und Decke der Messkammer orientiert ist, und wenn gleichzeitig die Ein- und Ausströmöffnungen für die Messflüssigkeit in der Mittelebene und/oder spiegelsymmetrisch zu derselben positioniert sind. Diese Ausgestaltung der Erfindung ist besonders wirksam bei hohen Durchflüssen, weil dann allein die in der Messkammer erzeugten hydrodynamischen Strömungskräfte das Flügelrad exakt zentrieren. Kräfte von einer anziehenden oder abstoßenden Magnetkupplung wirken aufgrund der erfindungsgemäßen Kupplung auf das Flügelrad nicht mehr ein.

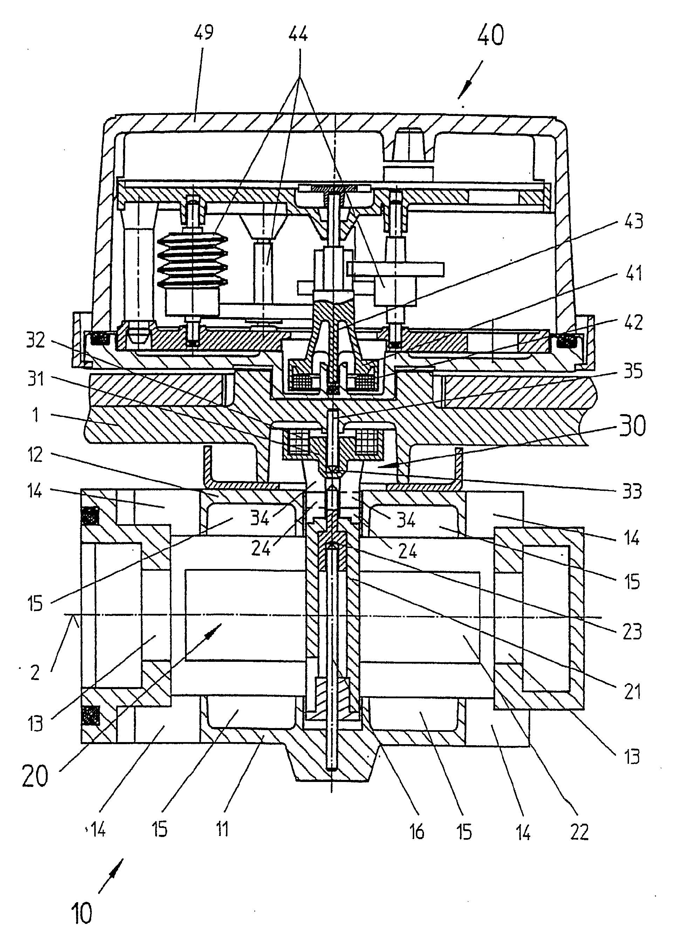

Anhand der Zeichnung soll die Erfindung an einem Ausführungsbeispiel erläutert werden.

Die Zeichnung zeigt rein schematisch einen Längsschnitt durch einen als Trockenläufer ausgebildeten Verbrauchszähler mit Flügelrad, wobei der Einfachheit halber das äußere druckfeste Gehäuse nicht dargestellt wurde.

Man erkennt zunächst eine Messkammer 10 mit einem Boden 11, einer Decke 12, sowie Einströmöffnungen 13 und Ausströmöffnungen 14 für die Messflüssigkeit. An Boden 11 und Decke 12 sind wie an sich bekannt Staurippen 15 vorgesehen, deren Aufgabe es ist, die Kennlinie des Flügelradzählers zu linearisieren.

Im Zentrum des Bodens 11 steht ein langer Lagerzapfen 16. Auf diesem hängt ein Flügelrad 20, bestehend aus einer Flügelradnabe 21, an der radiale Flügel 22 angebracht sind. In der Flügelradnabe 21 ist eine Lagerpfanne 23 vorgesehen, die mit dem Lagerzapfen 16 zusammen die Lagerung des Flügelrades 20 bildet. Diese Lagerung ist so positioniert, dass bei senkrechter Orientierung des Lagerzapfens 16 das Flügelrad 20 unter dem Einfluss der Schwerkraft stabil hängt.

Über der Messkammer 10 befindet sich eine druckfeste Platte 1, wie sie bei Trockenläufern üblich ist. Die Übertragung der Drehbewegung durch die Platte 1 hindurch erfolgt mittels Magnetkupplung 30.

Oberhalb der Platte 1 befindet sich ein Zählwerk 40 mit einem Zählwerksgehäuse 49, in dem die Zahnräder 44 eines Untersetzungsgetriebes und die eigentliche Anzeige, beispielsweise ein Rollenzählwerk (nicht dargestellt), untergebracht sind. Schließlich erkennt man im Zählwerksgehäuse 49 einen Magnetträger 41 mit einem Permanentmagneten 42, der mit Hilfe einer Welle 43 drehbar gelagert ist, wobei die Welle 43 aufgrund von Fertigungs- und Montagetoleranzen mehr oder weniger genau mit dem Lagerzapfen 16 fluchtet.

Unterhalb der druckfesten Platte 1 befindet sich ein weiterer Magnetträger 31 mit einem Permanentmagneten 32. Ein Lagerzapfen 35 und eine Lagerbuchse 33 im Magnetträger 31 bilden eine Lagerung, die so ausgebildet ist, dass der Magnetträger 31 unter dem Einfluss der Magnetkräfte stabil hängt.

Die dem Lagerzapfen 35 zugeordnete Fläche der Lagerbuchse 33 ist eben ausgebildet. Dadurch findet die Spitze des Lagerzapfens 35 stets eine solche Stelle, dass der Magnetträger 30 sich mit minimaler Reib- und Bremskraft drehen kann, auch wenn die Pole der Permanentmagnete 32, 42 nicht exakt konzentrisch sein sollten. Ein angemessen großer Innendurchmesser der Lagerbuchse 33 ermöglicht einen etwaigen radialen Versatz.

Die Übertragung der Drehbewegung des Flügelrades 20 auf den Magnetträger 31 erfolgt mit Hilfe einer Klauenkupplung, wobei zwei Klauen 24 an der Flügelradnabe 21 und zwei Klauen 34 am Magnetträger 31 angebracht sind. Diese Klauenkupplung 24, 34 entkoppelt das Flügelrad 20 in axialer Richtung, in radialer Richtung und begrenzt durch die Klauen 24, 34 in Umfangsrichtung. Dies bedeutet, dass die auf den Magnetträger 31 wirkenden axialen und radialen Kräfte das Flügelrad 20 nicht beeinflussen. Das Flügelrad 20 kann somit stets eine optimale Position in der Messkammer 10 einnehmen.

Diese Zentrierung des Flügelrades 20 wird dadurch unterstützt, dass die Messkammer 10 mit ihren hydraulischen Einbauten 15, die Ein- und Ausströmöffnungen 13, 14 und die sich innerhalb der Messkammer 10 befindenden Teile des Flügelrades 20 spiegelsymmetrisch zu einer Mittelebene 2 ausgebildet werden, die sich zwischen Boden 11 und Decke 12 der Messkammer 10 parallel zu diesen erstreckt.

Eine totale Entlastung der Flügelradlagerung 16, 23 tritt dadurch ein, indem das Gewicht des Flügelrades 20 so abgestimmt wird, dass es in der Messflüssigkeit schwimmt, und indem das Flügelrad 20 so ausbalanciert wird, dass in der Messflüssigkeit alle Kippmomente verschwinden, insbesondere wenn die Flügelradnabe 21 waagerecht liegt.

Aufgrund des Freiheitsgrades der Klauenkupplung 24, 34 in Umfangsrichtung kann das Flügelrad 20 bei beginnender Flüssigkeitsströmung losdrehen, ohne durch die Reibkräfte der Magnetkupplung 30 und des Zählwerks 40 gebremst zu werden. Sobald die Klauen 24, 34 in Eingriff gelangen, überträgt das Flügelrad 20 einen Impuls auf Magnetkupplung 30 und Untersetzungsgetriebe 44 mit der Folge, dass deren Haftreibung schlagartig überwunden wird. Ein solcher Zähler beginnt somit schon bei kleinsten Durchflüssen zu laufen.

Ein erfindungsgemäß optimierter Verbrauchszähler kann in jeder beliebigen Einbaulage die gleiche metrologische Klasse, vorzugsweise die höchste metrologische Klasse C erfüllen.

## Patentansprüche

1. Flüssigkeitszähler, im wesentlichen umfassend
- eine Messkammer (10) mit
- Boden (11),
- Decke (12),
- Ein- und Ausströmöffnungen (13, 14) für die Messflüssigkeit,
- Staurippen (15) an Boden (11) und Decke (12)
- und einem ersten Lagerelement (16),
- ein Flügelrad (20) in der Messkammer (10) mit
- einer Flügelradnabe (21),
- radialen Flügeln (22)
- und einem zweiten Lagerelement (23), passend zum ersten Lagerelement (16),
- ein Zählwerk (40) mit
- einem Zählwerksgehäuse (49),
- einem Untersetzungsgetriebe (44)
- und einer Anzeige,
- eine druckfeste Platte (1) zwischen Messkammer (10) und Zählwerk (40)
- und eine Magnetkupplung (30) mit Permanentmagneten (32, 42), die die Drehbewegung des Flügelrades (20) auf das Untersetzungsgetriebe (44) überträgt, **gekennzeichnet durch** die Merkmale:
- zwischen Flügelrad (20) und Magnetkupplung (30) ist eine zur Rotationsachse des Flügelrades (20) konzentrische Kupplung (24, 34) angeordnet mit folgenden Eigenschaften:
- sie entkoppelt das Flügelrad (20) in axialer Richtung von der Magnetkupplung (30),
- sie verleiht dem Flügelrad (20) in Umfangsrichtung einen auf weniger als 360° begrenzten Freiheitsgrad gegenüber der Magnetkupplung (30).

2. Flüssigkeitszähler nach Anspruch 1, **gekennzeichnet durch** das Merkmal:
- die Kupplung (24, 34) entkoppelt das Flügelrad (20) in radialer Richtung von der Magnetkupplung (30).

3. Flüssigkeitszähler nach Anspruch 1 oder 2, **gekennzeichnet durch** das Merkmal:
- die Kupplung ist eine Mitnehmerkupplung.

4. Flüssigkeitszähler nach einem der Ansprüche 1 bis 3, **gekennzeichnet durch** das Merkmal:
- die Kupplung ist eine Klauenkupplung (24, 34).

5. Flüssigkeitszähler nach Anspruch 1, **gekennzeichnet durch** das Merkmal:
- die Kupplung ist eine Hülsenkupplung.

6. Flüssigkeitszähler nach einem der Ansprüche 1 bis 5, **gekennzeichnet durch** das Merkmal:
- der Lagerpunkt zwischen der Spitze des Lagerzapfens (16) und der Lagerpfanne (23) des Flügelrades (20) liegt dicht unterhalb der Kupplung (24, 34).

7. Flüssigkeitszähler nach einem der Ansprüche 1 bis 6, **gekennzeichnet durch** die Merkmale:
- der dem Flügelrad (20) zugeordnete Permanentmagnet (32) sitzt auf einem Magnetträger (31),
- der Magnetträger (31) ist mittels Lagerbuchse (33) auf einem Lagerzapfen (35) gelagert,
- die mit der Spitze des Lagerzapfens (35) kooperierende Fläche ist eben,
- der Innendurchmesser der Lagerbuchse (33) ist angemessen größer als der Durchmesser des Lagerzapfens (35).

8. Flüssigkeitszähler nach einem der Ansprüche 1 bis 7, **gekennzeichnet durch** das Merkmal:
- das Flügelrad (20) ist so ausgewogen, dass die Summe der Auftriebskräfte und Abtriebskräfte in der Messflüssigkeit gleich Null ist.

9. Flüssigkeitszähler nach einem der Ansprüche 1 bis 8, **gekennzeichnet durch** das Merkmal:
- das Flügelrad (20) ist so ausbalanciert, dass in der Messflüssigkeit die Zentren der Auftriebskräfte und der Abtriebskräfte auf der Rotationsachse des Flügelrades (20) zusammenfallen und die Kippmomente verschwinden.

10. Flüssigkeitszähler nach einem der Ansprüche 1 bis 9, **gekennzeichnet durch** die Merkmale:
- die Messkammer (10) mit ihren hydraulischen Einbauten (15) und die sich in der Messkammer (10) befindenden Teile des Flügelrades (20) sind spiegelsymmetrisch zu einer Mittelebene (2) ausgebildet, die parallel zu Boden (11) und Decke (12) der Messkammer orientiert ist,
- die Ein- und Ausströmöffnungen für die Messflüssigkeit sind in der Mittelebene (2) und/oder spiegelsymmetrisch zu derselben positioniert.
